(19)

Europäisches
Patentamt
European
Patent Office
Office européen
des brevets

(11) **EP 2 219 899 B1**

(12) **EUROPEAN PATENT SPECIFICATION**

(45) Date of publication and mention
of the grant of the patent:
**27.06.2012 Bulletin 2012/26**

(51) Int Cl.:
***B60W 30/16*** *(2012.01)* ***G08G 1/16*** *(2006.01)*

(21) Application number: **08856110.5**

(86) International application number:
**PCT/SE2008/051371**

(22) Date of filing: **28.11.2008**

(87) International publication number:
**WO 2009/072965 (11.06.2009 Gazette 2009/24)**

(54) **METHOD AND DEVICE FOR SUPPORTING A REGULATING STRATEGY FOR THE DRIVING OF A VEHICLE**

VERFAHREN UND VORRICHTUNG ZUR UNTERSTÜTZUNG EINER REGELSTRATEGIE ZUM FAHREN EINES FAHRZEUGS

PROCEDE ET DISPOSITIF POUR SUPPORTER UNE STRATEGIE DE REGULATION POUR L'ENTRAINEMENT D'UN VEHICULE

(84) Designated Contracting States:
**AT BE BG CH CY CZ DE DK EE ES FI FR GB GR HR HU IE IS IT LI LT LU LV MC MT NL NO PL PT RO SE SI SK TR**

(30) Priority: **03.12.2007 SE 0702673**

(43) Date of publication of application:
**25.08.2010 Bulletin 2010/34**

(73) Proprietor: **Scania CV AB (publ)**
**151 87 Södertälje (SE)**

(72) Inventors:
• **SLETTENGREN, Johannes**
**S120 59 Ärsta (SE)**
• **JANSSON, Henrik**
**S-762 94 Rimbo (SE)**
• **SAHLHOLM, Per**
**S-141 45 Huddinge (SE)**

(56) References cited:
**DE-A1- 10 116 277     US-A1- 2006 050 148**
**US-B2- 6 856 906**

EP 2 219 899 B1

**Description**

TECHNICAL FIELD

The present invention relates generally to the field of vehicles and to determination of data which characterise a target vehicle. In particular, the invention relates to a method, a device and a computer programme product for supporting a regulating strategy for the driving of a vehicle and a motor vehicle comprising such a device.

DESCRIPTION OF PRIOR ART

Within the field of vehicles, and particularly within the field of transport vehicles, there are a number of different control mechanisms which facilitate the driving of a vehicle.

Examples of this are adaptive speed maintainers and overtaking support functions which indicate when overtaking of vehicles ahead should be effected, and functions for reducing fuel consumption and preventing collisions.

What is common to many of these functions is that they not only depend on the vehicle being driven but also depend on vehicles which are ahead of or behind that vehicle, hereinafter also called target vehicles. Such vehicles may have a large influence on such control mechanisms. To be able to improve these functions, it may therefore be relevant to determine various characteristics of a target vehicle. It may for example be relevant to classify the target vehicle according to some vehicle type, or to determine various types of characteristics of the target vehicle which call for different choices in such control mechanisms.

Classification might be done manually, but in that case the driver would have to input classification information to such a control mechanism. Doing so would entail the driver directing his/her attention to this data input, thereby possibly leading to the driver not being attentive to traffic, which might in the worse case lead to traffic accidents. It is therefore relevant that such vehicle classification be automatic.

Obtaining other characteristics entails data processing.

There is therefore a need to automatically determine various characteristics of a target vehicle in order to improve control mechanisms used in the driving of a motor vehicle.

There exist within this field known ways of automatically classifying a target vehicle. For example, in WO 03/006291, radar sensors, lidar sensors or video sensors are used to measure parameters relating to an object ahead, such as distance to the object, the vertical and horizontal extent of a reflecting surface, the geometry of the object and the surface characteristics of the reflection surface. Such measured data are thereafter used as a basis for selecting an object class. The same specification describes this being done by correlating the characteristic object classes with measured data. In this context, each object class has a characteristic pattern. Examples mentioned of such patterns comprise radar back-scatter cross-sections for detecting a motorcycle and characteristic speed for detecting a building. Each object is therefore associated with an object class by correlation analysis of measured data on the basis of characteristic patterns for object classes.

WO 2004/086301 describes how a video camera is used for classifying vehicles by means of self-learning systems which have been trained off-line by means of example sequences.

There is therefore a need for a simple, effective and automatic way of determining the characteristics of a target vehicle, e.g. a vehicle classification or other characteristics such as air resistance constant and maximum propulsion power.

SUMMARY OF THE INVENTION

An object of the present invention is to determine in a simple way the characteristics of a target vehicle.

The present invention does this by basing the determination of those characteristics solely on the target vehicle's acceleration and relating parameters such as speed. On this basis, it is only necessary to measure one variable of the target vehicle, viz. the distance between the target vehicle and the vehicle in which these characteristics are needed.

According to a first aspect of the present invention, this object is achieved by a method for supporting a regulating strategy for the driving of a vehicle, comprising the steps: of determining a number of acceleration values for a target vehicle on the basis of input values, which input values take the form of or are derived from detected distance values for the distance between the vehicle and the target vehicle,

of processing the acceleration values in order to obtain data which characterise the target vehicle, and delivering said data which characterise the target vehicle to a regulating device for regulating the driving of the vehicle,

of determining distribution measures for the acceleration on the basis of acceleration values in a number of groups of acceleration values, where each group comprises acceleration values determined with respect to corresponding speed values of the vehicle ahead within one of at least two speed ranges, and

of classifying vehicle types on the basis of the distribution measures, where said data which characterise the target vehicle are classification data which correspond to the classification.

According to a second aspect of the present invention, this object is also achieved by a device for supporting a regulating strategy for the driving of a vehicle and comprising: an acceleration determination unit adapted to determining a number of acceleration values for a vehicle ahead on the basis of input values from a distance detector, which input values take the form of or are derived from distance values detected by the detector for the distance between the vehicle and the vehicle ahead, and an acceleration value processing unit adapted to processing the acceleration values in order to obtain data which characterise the target vehicle, and to delivering said data which characterise the target vehicle to a regulating device adapted to regulating the driving of the vehicle,
a distribution determination unit adapted to determining distribution measures for the acceleration on the basis of acceleration values in a number of groups of acceleration values, where each group comprises acceleration values determined with respect to corresponding speed values of the vehicle ahead within one of at least two speed ranges, and
a vehicle classification unit adapted to classifying vehicle types on the basis of the distribution measures, and to delivering data which characterise the target vehicle in the form of classification data which correspond to the classification.

According to a third aspect of the present invention, this object is also achieved by a motor vehicle comprising a distance detector for detecting distance values between the vehicle and a target vehicle and supplying input values related to the distance values, a regulating device adapted to regulating the driving of the vehicle, and a device for supporting a regulating strategy for the movement of the motor vehicle according to the second aspect.

According to a fourth aspect of the present invention, this object is also achieved by a computer programme product for supporting a regulating strategy for the driving of a vehicle and comprising computer programme codes for causing a computer, when said computer programme codes are loaded in said computer, to:

determine a number of acceleration values for a target vehicle on the basis of input values, which input values take the form of or are derived from detected distance values for the distance between the vehicle and the target vehicle,
process the acceleration values in order to obtain data which characterise the target vehicle,
determine distribution measures for the acceleration on the basis of acceleration values in a number of groups of acceleration values, where each group comprises acceleration values determined with respect to corresponding speed values of the vehicle ahead within one of at least two speed ranges, and
deliver said data which characterise the target vehicle to a regulating device for regulation of the driving of the vehicle.

The invention has a number of advantages. It provides a simple, effective and automatic way of arriving at data which characterise the target vehicle. Moreover, this is done on the basis of acceleration, which also means that only one variable need be measured with respect to the target vehicle, viz. its distance. The invention is also easy to implement, since it substantially uses units which are already present in a vehicle. The only further elements needed are speed determination unit, acceleration determination unit and acceleration value processing unit, all of which are implementable in software.

BRIEF DESCRIPTION OF THE DRAWINGS

The present invention is described below in more detail with reference to the attached drawings, in which:

Fig. 1 depicts schematically a vehicle travelling on a road behind a vehicle ahead, a target vehicle,
Fig. 2 depicts a block diagram of a general device according to the invention for supporting a regulating strategy for the driving of a vehicle,
Fig. 3 depicts a flowchart of a general method according to the invention for supporting a regulating strategy for the driving of a vehicle,
Fig. 4 depicts a block diagram of a device according to a first embodiment of the invention for supporting a regulating strategy for the driving of a vehicle,
Fig. 5 depicts a flowchart of a number of method steps in a method according to the first embodiment of the invention for supporting a regulating strategy for the driving of a vehicle,
Fig. 6 depicts two distributions for a group of accelerations which distinguish a heavy from a light vehicle,
Fig. 7 depicts schematically a vehicle travelling on a gradient and the forces which act upon it,
Fig. 8 depicts a block diagram of a device according to a second embodiment of the invention for supporting a regulating strategy for the driving of a vehicle,
Fig. 9 depicts a flowchart of a number of method steps in a method according to the second embodiment of the invention for supporting a regulating strategy for the driving of a vehicle, and
Fig. 10 depicts schematically a computer programme product in the form of a CD ROM disc containing computer programme codes for executing the method according to the present invention.

DETAILED DESCRIPTION OF EMBODIMENTS

The present invention is directed towards arriving at data which characterise a vehicle ahead, a target vehicle, in order to make it easier to regulate the driving of a vehicle. Data which characterise the target vehicle therefore support a regulating strategy according to which the driving of a vehicle is regulated.

In today's motor vehicles, and particularly in many heavy motor vehicles, there are now many different supports for the driver in regulating the vehicle, e.g. overtaking support, adaptive speed maintenance, collision avoidance and fuel consumption control.

For such regulating functions to work well, it may be important for characterising data concerning a vehicle ahead or behind, a so-called target vehicle, to be obtained so that correct measures can be proposed or executed. The process of arriving at such characterising data also needs to be automatic, so that the driver does not need to arrive at such data manually. The present invention is intended to arrive at such characterising data in a simple, effective and automatic way.

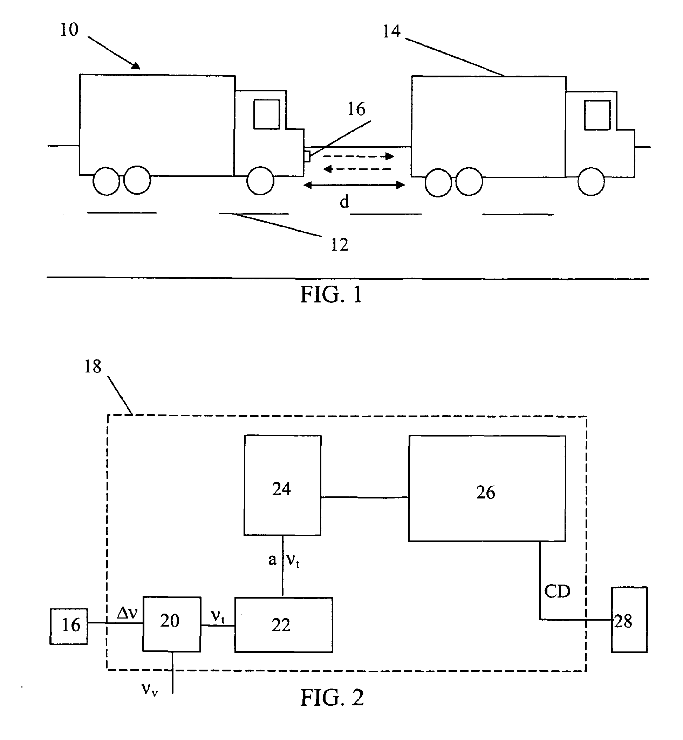

Fig. 1 depicts a motor vehicle 10. The motor vehicle 10 is preferably a truck, although it should be noted that the present invention is not limited to trucks but may be used in all motor vehicles. Nor is the invention limited to vehicles driven by a driver, as it may also be applied in driverless vehicles. In Fig. 1 the motor vehicle 10 is travelling on a road 12. On the road there is also a target vehicle 14 in the form of a vehicle ahead, which in this depiction is another truck. The motor vehicle 10 is equipped with a distance sensor 16 which may comprise a radar, a lidar or a laser. On the basis of the echo from a signal emitted by the sensor 16, the distance d to the target vehicle 14 can be determined by this sensor 16. Certain such sensors may also calculate a relative speed value.

Fig. 2 depicts a block diagram of a general device 18 according to the invention for supporting a regulating strategy for the driving of a vehicle. This device is connected to the sensor 16, from which it receives input values $\Delta v$ in the form of relative speeds determined for the target vehicle by the sensor 16. The device 18 is also connected to an exemplifying regulating device 28 which regulates one or more aspects of the driving of the vehicle. The regulating device 28 may for example be a device which executes adaptive speed maintenance, provides overtaking support or collision protection or controls fuel consumption. The device 18 comprises a speed determination unit 20 which receives said input values $\Delta v$. This speed determination unit 20 also receives speed values $v_v$ from a speed determination device in the vehicle 10 (not depicted). The speed values $v_v$ therefore relate to the speed of the vehicle 10 which is being driven. The speed determination unit 20 is itself connected to an acceleration determination unit 22 to which it supplies estimated speed values $v_t$ for the target vehicle 14. The acceleration determination unit 22 is itself connected to a memory 24, to which it delivers acceleration values a and also, in some cases, relating speed values $v_t$. The memory 24 is itself connected to an acceleration value processing unit 26 which is itself connected to the regulating device 28, to which it delivers characterising data CD.

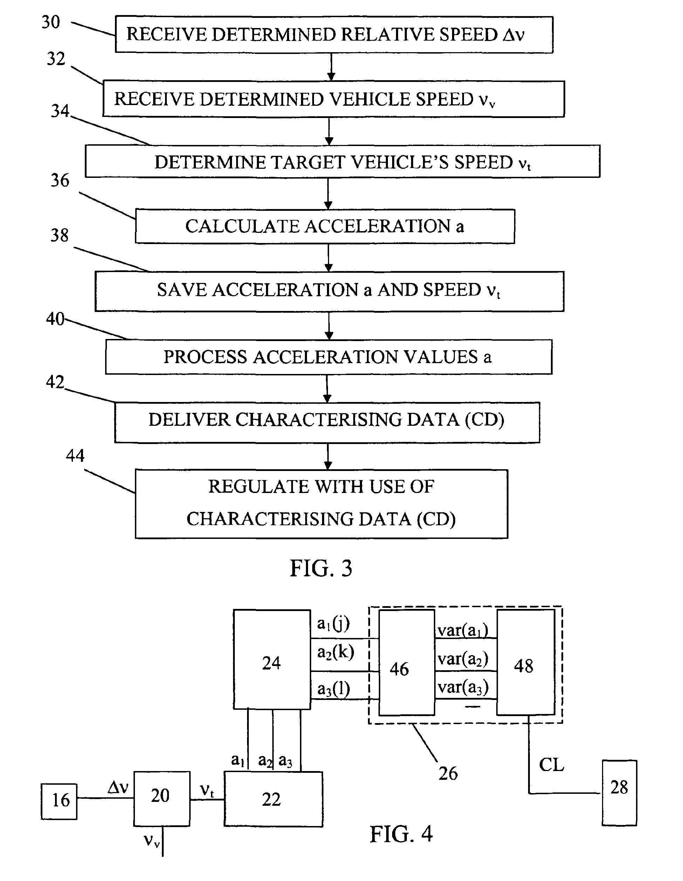

The general mode of operation of the device will now be explained in more detail with reference also to Fig. 3, which depicts a flowchart of a number of method steps which are executed in a general method according to the present invention for supporting a regulating strategy for the driving of a vehicle.

When the vehicle 10 is travelling on the road 12, it may happen to be behind a vehicle ahead, the target vehicle 14. When this happens, the sensor 16 detects the distance d to that target vehicle 14. According to a variant of the present invention, the sensor 16 will also calculate a relative speed $\Delta v$ on the basis of this detected distance d. This relative speed $\Delta v$ is thereafter supplied as an input value to the speed determination unit 20 at recurring regulated intervals of time, sampling intervals. The speed determination unit 20 thus receives these input values, step 30. At the same sampling intervals, the speed determination unit 20 receives speed values $v_v$ for the vehicle 10, step 32. On the basis of these two values, the speed calculation unit 20 thereafter determines or calculates the speed $v_t$ for the target vehicle 14 at each sampling interval, step 34. This speed $v_t$ is thereafter supplied to the acceleration determination unit 22. On the basis of a number of different such speed values $v_t$, the acceleration determination unit 22 thereafter calculates the acceleration a which corresponds to the speed $v_t$ and the detected distance, step 36. The acceleration determination unit 22 thereafter saves each such acceleration value a in the memory 24 together, where applicable, with a corresponding speed value $v_t$, step 38. The acceleration values a and speed values $v_t$ stored in the memory 24 are thereafter processed in the acceleration value processing unit 26 to arrive at data CD which characterise the target vehicle 14, step 40. Thereafter these characterising data CD are delivered to the regulating device 28, which itself regulates a vehicle driving function with use of these data CD, step 44. The result is improved regulation of the vehicle in that these characterising data can be used in the regulating process.

According to a first embodiment of the present invention, said characterising data CD are vehicle classification data. The target vehicle is therefore classified according to this first embodiment.

Such classification can be done with regard to type of vehicle, e.g. truck, passenger car, motorcycle etc. It can also be done with respect to the weight, engine power etc. of the vehicle ahead. There may for example be significant differences between a fully laden truck and an empty truck.

Fig 4 depicts a block diagram of a device 18 according to the first embodiment of the invention for supporting a regulating strategy for the driving of a vehicle. As in Fig. 2, Fig. 4 depicts the sensor 16 which delivers input values $\Delta v$ in the form of determinations of relative speed to the speed determination unit 20, which in this case likewise receives speed values v. The speed determination unit 20 is here again connected to the acceleration determination unit 22 which is itself connected to the memory 24. In this embodiment, the acceleration determination unit 22 delivers to this memory 24 acceleration values $a_1$, $a_2$ and $a_3$ which are divided into groups. The connection is depicted here in the form of three lines between these units 22 and 24. According to this first embodiment, the acceleration value processing unit 26 comprises a distribution determination unit 46 and a vehicle classification unit 48. The memory 24 in this first embodiment is connected to the distribution determination unit 46, a connection likewise here depicted in the form of three lines, and delivers acceleration values $a_1(j)$, $a_2(k)$ and $a_3(1)$ in the various groups to said unit 46. The distribution determination unit 46 is itself connected to the vehicle classification unit 48, a connection likewise here depicted in the form of three lines, and delivers distribution values $var(a_1)$, $var(a_2)$, and $var(a_3)$ for the various groups to said unit 48. The vehicle classification unit 48 is itself connected to the regulating device 28, to which it delivers classification data CL. In this embodiment, the aforesaid characterising data therefore comprise classification data CL.

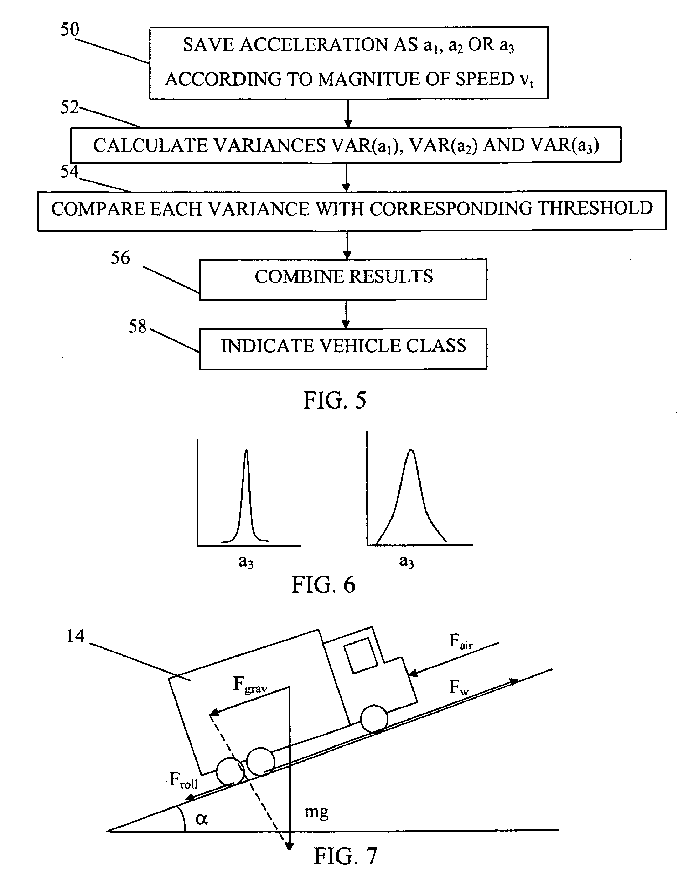

Parts of the first embodiment will now be explained in more detail with reference also to Fig. 5, which depicts a flowchart of a number of method steps which are executed in the method according to the first embodiment for supporting a regulating strategy for the driving of a vehicle.

The distance d is detected here by the sensor 16 in the same way as described in the general description of the invention. On the basis of this distance d, relative speed $\Delta v$ and the vehicle's speed $v_v$, the speed determination unit 20 thereafter calculates the speed $v_t$ of the target vehicle 14. This is followed by determination of the acceleration a by the acceleration determination unit 22. An acceleration value a and a speed value $v_t$ are thus calculated for each input value $\Delta v$ supplied by the sensor 16. The acceleration determination unit 22 thereafter saves each such acceleration value in the memory 24. Here the acceleration value is saved in a group which is determined by the relating speed.

The groups are here determined according to the number of speed ranges, which are at least two in number, in the present example three. It should be noted, however, that finer resolution with more ranges is possible.

If it is now assumed that there are L groups of speed ranges, each acceleration sample n is saved according to

$$a_1(j) = a(n), \text{ om } v_t(n) > v_1 \qquad\qquad j = 1, 2, 3 \dots, m_1 \qquad\qquad (1)$$

$$a_2(k) = a(n) \text{ om } v_1 > v_t(n) > v_2 \qquad\qquad k = 1,2,3, \dots, m_2 \qquad\qquad (2)$$

$$a_L(l) = a(n) \text{ om } v_t(n) < v_{L-1} \qquad\qquad l = 1, 2, 3, \dots m_L \qquad\qquad (3)$$

in which $v_t$ is the calculated speed of the target vehicle and

$$n = 1, \dots, \sum_{r=1}^{L} m_r \qquad\qquad (4)$$

There are thus L groups each comprising a number of acceleration values related to a corresponding speed range. In the above example, there were thus three groups and according to the invention the accelerations in the memory 24 are therefore stored as acceleration values $a_1$ in a first group, acceleration values $a_2$ in a second group and acceleration values $a_3$ in a third group according to the magnitude of the corresponding target speed $v_t$, step 50.

The distribution determination unit 46 thereafter collects or takes the acceleration values in each group from the memory 24 and calculates a distribution measure for each group of acceleration values. The distribution measure may be calculated in a number of different ways, e.g. as variance, standard deviation or some other distribution measure. By way of example, the variance is calculated here. Thus the distribution determination unit calculates a variance for each group, here the variances $VAR(a_1)$, $VAR(a_2)$ and $VAR(a_3)$, step 52.

For a group with acceleration sample $a = a_1, a_2, \dots, a_N$, the variance may thus be calculated according to

$$\mathrm{var}(a) = \sigma^2 = \sum_{i=1}^{N} (a_i - E(a_i))^2 P(a_i) \qquad (5)$$

in which $E(a_i)$ is the expected value for the acceleration $a_i$, i.e. the mean value, and $P(a_i)$ is the probability that the acceleration will be exactly $a_i$. Calculating the exact variance of a number of values entails knowing the probability distribution of the population from which the values come. The variance may be estimated when there are many values. A way of estimating the variance is according to

$$\mathrm{var}(a) \approx \sigma^2_{estimat} = \frac{1}{N-1} \sum_{i=1}^{N} a_i^2 - \frac{N}{N-1} E(a)^2 \qquad (6)$$

According to a variant of the present invention, the expected value is assumed to be nil, in which case the second term in the above expression drops out.

It is also possible to estimate the expected value according to

$$E(a)^2 \approx \frac{1}{N} \sum_{i=1}^{N} a_i \qquad (7)$$

In the manner described above, a number of variances can thus be calculated for each group. The variances $\mathrm{VAR}(a_1)$, $\mathrm{VAR}(a_2)$ and $\mathrm{VAR}(a_3)$, are thereafter sent from the distribution determination unit 46 to the vehicle classification unit 48.

The vehicle classification unit 48 thereafter compares each such variance with at least one corresponding threshold, step 54. In the present example there is only one such threshold, a variance above it indicates a light vehicle and a variance below it indicates a heavy vehicle. It should be noted, however, that there may be a number of such thresholds. Thereafter the vehicle classification unit 48 combines the results of the respective comparisons, step 56, and indicates the vehicle class on that basis, step 58. Classification data CL corresponding to the classification are then fed to the regulating device 28, which itself regulates a vehicle driving function with use of these vehicle class indication data.

When the variances are combined, they can quite easily be compared, and if the majority of them denote a certain type of vehicle, that vehicle is indicated. It is also possible in this context for different weights to be applied to the different variances. The variance corresponding to the highest speed range may for example have a greater weight than the second, and the variance corresponding to the lowest speed range may have a lowest weight. It is also possible for a group which comprises more values to have a greater weight than a group which comprises fewer values.

Fig. 6 depicts two distributions for different vehicles in the third group $a_3$ of accelerations, showing how a heavy vehicle may be distinguished from a light vehicle. The left diagram depicts the distribution for a heavy vehicle such as a truck, and the right diagram the distribution for a light vehicle such as a passenger car. As may be seen, it is possible to distinguish these distributions by a suitable threshold value, whereby a variance above the threshold value indicates a lighter vehicle and a variance below the threshold value a heavier vehicle.

With regard to indication, it is also possible for the probability of correct indication to be expressed in terms of depending on how many groups seem correct and the weighting of the groups.

In this way the regulating device can thus receive classification data which classify the vehicle, and the regulation can therefore be more effective. Moreover, the first embodiment of the invention does not need to use calculations of the geometry of the vehicle ahead and therefore needs little processing power. Vehicle classification is thus achieved in a simple, effective and automatic way. The classification gives a good indication of the characteristics of the target vehicle and also its driver's behaviour.

As mentioned above, classification data may denote type of vehicle, such as truck, passenger car, motorcycle etc. The same is also possible with respect to the weight, engine power etc. of the vehicle ahead. There may for example be significant differences between a fully laden truck and an empty truck.

According to the invention, other characterising data may also be determined for a target vehicle. According to a second embodiment of the present invention, characterising data such as an air resistance constant and data corresponding to maximum traction power with respect to a target vehicle are determined. The air resistance constant is here related to the air resistance with respect to the weight of the target vehicle, and data corresponding to maximum traction power represent maximum traction power with respect to the weight of the target vehicle.

A vehicle travelling on a road is subject to a number of different forces. Fig. 7 depicts schematically a target vehicle 14 travelling on an upgrade at an angle of inclination $\alpha$. This vehicle 14 is acted upon by the wheel's driving power $F_w$, an air resistance $F_{air}$, the force of gravity in the direction of the road $F_{grav}$ and the rolling resistance $F_{roll}$.

As may be seen in Fig. 7, the gravitation $F_{grav}$ in the direction of the road is a component of the gravitational force mg.

The vehicle's acceleration may then be described by the equation

$$a = F_w/m - F_{roll}/m - F_{air}(v)/m - F_{grav}/m \qquad (8)$$

where m is the weight of the vehicle.

Here the gravitational force in the direction of the road $F_{grav}$ can also be arrived at by

$$F_{grav} = mg \sin(\alpha) \qquad (9)$$

Against the background of this information, the second embodiment of the present invention may now be described.

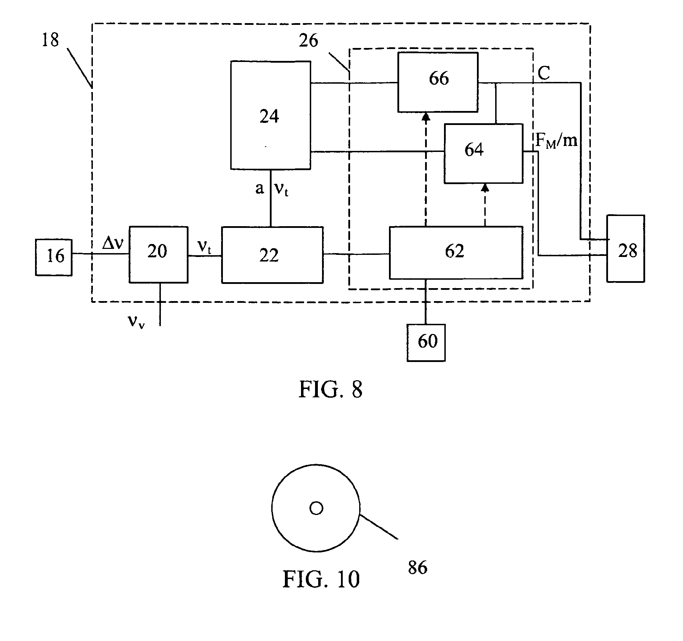

Fig. 8 depicts a block diagram of a device 18 according to the second embodiment of the invention for supporting a regulating strategy for the driving of a vehicle. As in Fig. 2, Fig. 8 depicts the sensor 16 which delivers input values $\Delta v$ in the form of determinations of relative speed to the speed determination unit 20, which here likewise receives speed values $v_v$. The speed determination unit 20 is here again connected to the acceleration determination unit 22 which is itself connected to the memory 24. In this embodiment the acceleration determination unit 22 delivers to said memory 24 acceleration values a and also relating speed values $v_t$. According to this second embodiment the acceleration value processing unit 26 comprises a gradient detection unit 62 connected to the acceleration determination unit 22. The gradient detection unit 62 is also connected to a slope determination unit 60 in the vehicle. Such a slope determination unit can determine the slope of a certain gradient on which the vehicle is travelling. To this end, it may use an accelerometer, topographical data, map data etc. to obtain a value for the slope of a gradient. It is also possible that sensors indicating the slope of a gradient may be stationed close to a road. Sensors might then be read by radar, microwaves or some other reading technique such as RFID. Slope data from such a sensor situated beside a road might thereafter be fed to the gradient detection unit 62. It is also possible for the slope to be determined without direct measurement, e.g. it might be determined on the basis of the propulsion power and resistance to movement of the respective vehicle.

The acceleration value processing unit 26 also comprises an air resistance constant determination unit 66 and a traction power determination unit 64 which are both connected to the memory 24. The air resistance constant determination unit 66 is also connected to the traction power determination unit 64. The air resistance constant determination unit 66 and the traction power determination unit 64 may with advantage take the form of Kalman filters and, in that case, so-called "extended" Kalman filters. The slope determination unit 62 controls the air resistance constant determination unit 66 and the traction power determination unit 64, control represented by broken-line arrows. The air resistance constant determination unit 66 finally delivers to the regulating device 28 and the traction power determination unit 64 an air resistance constant C, and the traction power determination unit 64 delivers to the regulating device 28 data $F_M/m$ corresponding to the target vehicle's maximum traction power. In this embodiment, the aforesaid characterising data therefore comprise an air resistance constant C and data $F_M/m$ corresponding to the target vehicle's maximum traction power.

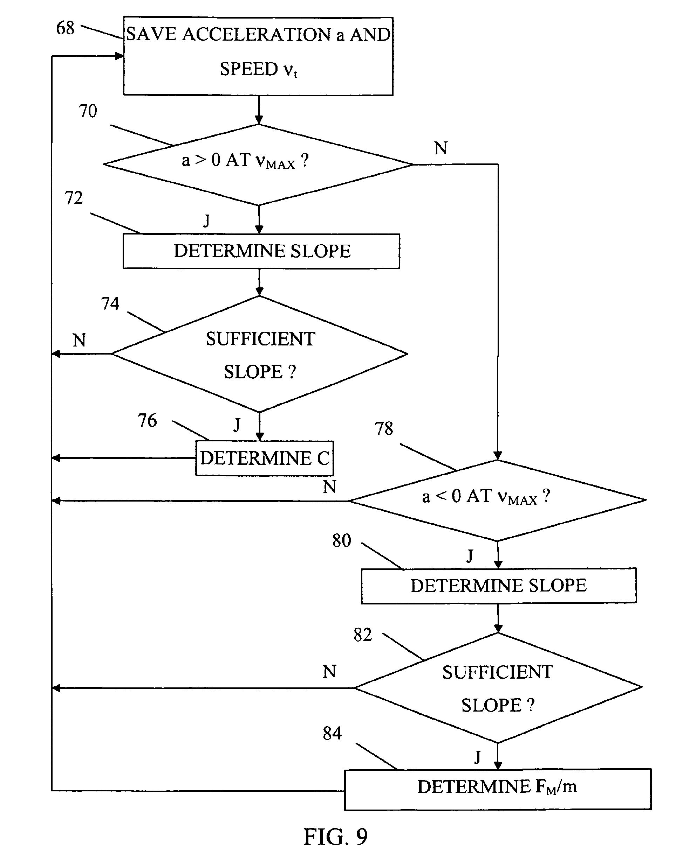

Parts of the second embodiment will now be explained in more detail with reference also to Fig. 9, which depicts a flowchart of a number of method steps which are executed in a method according to the second embodiment of the invention for supporting a regulating strategy for the driving of a vehicle.

The distance d is detected here by the sensor 16 in the same way as described in the general description of the invention. On the basis of this distance d, relative speed $\Delta v$ and the vehicle's speed $v_f$, the speed determination unit 20 thereafter calculates the speed $v_t$ of the target vehicle 14. This is followed by determination of the acceleration a by the acceleration determination unit 22. An acceleration value a and a speed value $v_t$ are thus calculated for each input value supplied by the sensor 16. These acceleration and speed values a, $v_t$ are thereafter saved in the memory 24, step 68. This is effected continuously. The gradient detection unit 62 also receives the acceleration and speed values. This unit 62 identifies first whether the target vehicle 14 is on a downgrade which has sufficient slope. Such identification may be by examining acceleration values received at a maximum speed of the target vehicle, e.g. a maximum speed of 90 km/h. A truck travelling at this speed will increase its speed somewhat when it reaches a downgrade. It will thus accelerate somewhat. If therefore analysis of the acceleration a shows a brief speed increase at maximum speed, step 70, the gradient detection unit 62 will suggest that the target vehicle 14 is on a possible downgrade. If the acceleration does not represent a speed increase at maximum speed, step 70, the method continues with step 78 to identify whether the target vehicle 14 was on an upgrade. If it was a possible downgrade, the speed and acceleration values obtained for the target vehicle and saved in the memory 24 are therefore indicated as values attributable to a possible downgrade. When the vehicle 10 itself reaches the position where a possible gradient was indicated, the gradient detection unit 62 determines the slope of the gradient, step 72. This may be done by receiving suitable data from the sensor 60. It then investigates whether the slope of the gradient is sufficient, which it normally will be if the slope is more than 1-2%. If this slope is not sufficient, step 74, the method continues to collect acceleration and speed values, step 68. If on the contrary the slope was sufficient, step 74, it is therefore indicated that the target vehicle was on a downgrade and the gradient detection unit 62 will order the air resistance constant determination unit 66 to determine an air resistance constant on the basis of the values in the memory 24 which have been indicated as values attributable to that downgrade. Determination of this constant C is effected at step 76.

On a sufficiently steep downgrade, a target vehicle 14 will not accelerate somewhat but simply roll. The result is an acceleration which is due to the force of gravity being greater than the rolling resistance and the air resistance. This means that the wheel's driving force $F_w$ in equation (8) above will be nil. Moreover, the term $F_{air}(v)/m$ will here be a square dependent on the speed and may thus be written as $C * v^2$.

This means that it is possible on a downgrade to simplify equation (8) as modified by equation (9) to

$$a = - F_{roll}/m \ 2 \ C * v^2 + g * \sin(\alpha) \qquad (10)$$

Here, $F_{roll}/m$ is substantially constant and very small, which makes it possible to calculate C, which is an air resistance constant for the specific target vehicle and is related to the latter's weight.

In this way, the air resistance constant C can thus be calculated when the target vehicle 14 is travelling on a downgrade. This value can be delivered by the air resistance constant determination unit 66 both to the regulating device 28 and to the traction power determination unit 64.

If the acceleration at maximum speed was not greater than nil, step 70, the gradient detection unit 62 investigates whether the target vehicle 14 is on an upgrade which has sufficient slope. An indication of a possible upgrade can be obtained by investigating acceleration values received at a maximum speed of the target vehicle, e.g. here again a maximum speed of 90 km/h. A truck travelling at this speed will reduce speed somewhat when it reaches an upgrade. It will thus decelerate somewhat. If therefore analysis of the acceleration shows a brief speed decrease at maximum speed, step 78, the gradient detection unit 62 will suggest that the target vehicle is travelling on a possible upgrade. If the acceleration at maximum speed was not negative, step 78, the method continues with collection of acceleration and speed values a, $v_t$, step 68. If on the contrary there was a possible upgrade, step 78, the speed and acceleration values collected for the target vehicle and saved in the memory 24 will therefore be indicated as values attributable to a possible upgrade. When the vehicle 10 itself reaches the position where a possible upgrade was indicated, the gradient detection unit 62 determines the slope of the gradient, step 80. This may be done by collecting suitable data from the sensor 60. The gradient detection unit 62 then investigates whether the slope of the gradient is sufficient, which it normally will be if the slope is greater than 1%. If this slope is not sufficient, step 82, the method continues with collection of acceleration and speed values, step 68. If on the contrary the slope was sufficient, step 82, the gradient detection unit 62 thereafter orders the traction power determination unit 64 to determine the maximum traction power with respect to the weight of the target vehicle, which is done at step 84. Thereafter the method reverts to saving acceleration and speed values, step 68.

At a sufficiently steep upgrade, a target vehicle will use its maximum traction power. Since the air resistance constant will in many cases have already been determined, it is possible to calculate the maximum traction power with respect to weight from the previously stated equation (8) modified by equation (9) in which $F_w$ will now be set to the maximum traction power $F_M$. Equation (8) modified by equation (9) will then be as follows:

$$a = F_M/m \ - \ F_{roll}/m \ - \ C * v^2 \ - \ g * \sin(\alpha) \qquad (11)$$

Here, $F_{roll}/m$ is substantially constant and very small. As C is now known, it is therefore possible to calculate $F_M/m$.

In this way the maximum traction power with respect to weight $F_M/m$ can thus be calculated when the target vehicle is travelling on an upgrade. This value can thereafter be delivered by the traction power determination unit 64 to the regulating device 28.

It is possible that on an upgrade no air resistance constant has yet been determined. It is then possible for such a constant to be estimated and for the estimated constant to be thereafter replaced by a calculated air resistance constant when a downgrade has been passed. A way of obtaining such an estimate if the first and second embodiments are combined is for the estimate to be on the basis of the vehicle's classification which has been done.

In this way, the regulating device can thus obtain characteristic data concerning the target vehicle which can thereafter be used in the regulating function. In this context, the air resistance constant may provide data which are valuable for regulating purposes in that it can be used for determining which out of the vehicle and the target vehicle rolls faster downhill. In the same way, the maximum traction power with respect to weight may provide valuable data about which of the vehicles is more powerful uphill. This may for example be utilised in an adaptive speed maintainer. The air resistance constant can also be used for determining the distance which the vehicle should maintain from the target vehicle.

The memory 24 may take the form of a conventional memory such as a RAM memory. The speed determination unit, acceleration determination unit and acceleration value processing unit preferably take the form of one or more processors with one or more programme memories comprising computer programme codes which execute the method according to the invention. This may be achieved by means of a computer, but it should be noted that the aforesaid units may also be implemented by a suitable combination of logic circuits. Various hardware units in the vehicle may also communicate with one another via a databus, e.g. a so-called CAN buss. The aforesaid programme codes may also be provided in the form of a computer programme product, which may be in the form of a portable memory device such as a CD ROM disc. Such a disc 86 is depicted schematically in Fig. 10. The programme codes may also be provided in the form of pure computer programme codes which may be provided on a server and be downloaded therefrom to a vehicle. When such programme codes have been loaded into a computer or a control unit in a vehicle, a device according to the invention has been implemented.

The invention according to both embodiments thus provides the regulating device with characteristic data for the target vehicle. This causes the regulating device to function better. It also results in improved traffic safety in that adaptations to the target vehicle can be done in a better way. A further advantage of the invention is that reduced fuel consumption might be achieved with an automatic speed maintainer which is based on distance data, since the increased amount of knowledge about the target vehicle can be used in combination with topographical data to control the distance and minimise braking.

The present invention has a number of further advantages. It provides a simple, effective and automatic way of arriving at data which characterise the target vehicle. Moreover, this is done on the basis of acceleration. This means that only one variable need be measured with respect to the target vehicle, viz. its distance. The invention is also easy to implement in that it substantially uses units which are already present in a vehicle. The only further elements needed are speed determination unit, acceleration determination unit and acceleration value processing unit, all of which are implementable in software.

The device according to the invention may comprise one or both of the sensors described above and also the regulating device. The distance sensor was described above as calculating the relative speed. It is also possible that it may calculate the target vehicle's speed on the basis of the vehicle's speed. As an alternative, it is also possible for the speed determination unit to calculate the relative speed. It is also possible to provide a single calculation unit which calculates both acceleration and speed. The present invention is therefore only to be limited by the claims set out below.

**Claims**

1. A method for supporting a regulating strategy for the driving of a vehicle (10), comprising the steps:

of determining (36) a number of acceleration values (a; $a_1$, $a_2$, $a_3$) for a target vehicle (14) on the basis of input values ($\Delta v$), which input values take the form of or are derived from detected distance values for the distance (d) between the vehicle and the target vehicle,
of processing (40; 52, 54, 56, 58; 70, 72, 74, 76, 78, 80, 82, 84) the acceleration values in order to obtain data (CD; CL; C, $F_M/m$) which characterise the target vehicle, and
delivering (42) said data which characterise the target vehicle to a regulating device (28) for regulating (44) the driving of the vehicle,
of determining (52) distribution measures ($VAR(a_1)$, $VAR(a_2)$, $VAR(a_3)$) for the acceleration on the basis of acceleration values in a number of groups of acceleration values ($a_1$, $a_2$, $a_3$), where each group comprises acceleration values determined with respect to corresponding speed values of the vehicle ahead within one of at least two speed ranges, and
of classifying (58) vehicle types on the basis of the distribution measures, where said data which characterise the target vehicle are classification data (CL) which correspond to the classification.

2. A method according to claim 1, in which each distribution measure is compared (54) with at least one threshold value, and the vehicle type is classified by combining (56) the results of the respective comparisons.

3. A method according to claim 1 or 2, in which the combining entails giving greater weight to a distribution measure calculated for a higher speed range than to one which is calculated for a lower speed range.

4. A method according to any one of claims 1-3, in which the combining entails giving greater weight to a distribution measure based on many acceleration values than to one which is based on fewer acceleration values.

5. A method according to any one of claims 1-4, comprising in addition the step of calculating a probability that the classification is correct, on the basis of the various distribution measures.

6. A method according to any one of the foregoing claims, in which the step of processing the acceleration values comprises in addition the steps of determining (70, 72, 74) whether the target vehicle is on a downgrade and determining (76) an air resistance constant (C) for the target vehicle on the basis of acceleration values (a) collected when the target vehicle is on the downgrade, where said data which characterise the target vehicle comprise the air resistance constant (C).

7. A method according to claim 6, in which the step of processing the acceleration values comprises in addition the steps of determining (78, 80, 82) whether the target vehicle is on an upgrade and determining (84) data ($F_M$/m) corresponding to the target vehicle's maximum traction power ($F_M$) on the basis of acceleration values collected when the target vehicle is on the upgrade, where said data which characterise the target vehicle comprise said data ($F_M$/m) corresponding to the target vehicle's maximum traction power ($F_M$).

8. A method according to claim 7, in which the determination of data ($F_M$/m) corresponding to the target vehicle's maximum traction power ($F_M$) is also based on the air resistance constant (C).

9. A method according to any one of claims 6-8, in which the step of processing the acceleration values comprises in addition the step of determining (72, 80) the slope ($\alpha$) of a gradient and using the slope in the processing of the acceleration values which is executed with respect to that gradient.

10. A device (18) for supporting a regulating strategy for the driving of a vehicle (10) and comprising:

an acceleration determination unit (22) adapted to determining a number of acceleration values (a; $a_1$, $a_2$, $a_3$) for a vehicle ahead (14) on the basis of input values ($\Delta$v) from a distance detector (16), which input values take the form of or
are derived from distance values detected by the detector for the distance (d) between the vehicle and the vehicle ahead,
an acceleration value processing unit (26) adapted to processing the acceleration values in order to obtain data (CD; CL; C, $F_M$/m) which characterise the target vehicle, and to delivering said data which characterise the target vehicle to a regulating device (28) adapted to regulating the driving of the vehicle,
a distribution determination unit (46) adapted to determining distribution measures (VAR($a_1$), VAR($a_2$), VAR($a_3$)) for the acceleration on the basis of acceleration values in a number of groups of acceleration values ($a_1$, $a_2$, $a_3$), where each group comprises acceleration values determined with respect to corresponding speed values of the vehicle ahead within one of at least two speed ranges, and a vehicle classification unit (48) adapted to classifying vehicle types on the basis of the distribution measures and to delivering data which characterise the target vehicle in the form of classification data (CL) which correspond to the classification.

11. A device (18) according to claim 10, in which a vehicle classification unit (48) is adapted to comparing each distribution measure with at least one threshold value and determining the vehicle class by combining the results of the respective comparisons.

12. A device (18) according to claim 10 or 11, in which said combining entails giving greater weight to a distribution measure calculated for a higher speed range than to one which is calculated for a lower speed range.

**13.** A device (18) according to any one of claims 10-12, in which said combining entails giving greater weight to a distribution measure based on many acceleration values than to one which is based on fewer acceleration values.

**14.** A device (18) according to any one of claims 10-13, in which the vehicle characteristic unit is also adapted to calculating a probability that the classification is correct, on the basis of the various distribution measures.

**15.** A device (18) according to any one of claims 10-14, in which the acceleration value processing unit (26) comprises:

a gradient detection unit (62) adapted to determining whether the target vehicle is on a downgrade and an air resistance constant determination unit (66) adapted to determining an air resistance constant (C) for the target vehicle on the basis of acceleration values (a) collected when the target vehicle is on the downgrade, and to delivering data which characterise the target vehicle, comprising the air resistance constant (C).

**16.** A device (18) according to claim 15, in which the gradient detection unit (62) is also adapted to determining whether the target vehicle is on an upgrade, and further comprising a traction power determination unit (64) adapted to determining data ($F_M$/m) corresponding to the target vehicle's maximum traction power ($F_M$) on the basis of acceleration values collected when the target vehicle is on the upgrade, and to delivering data which characterise the target vehicle, comprising said data ($F_M$/m) corresponding to the target vehicle's maximum traction power ($F_M$).

**17.** A device (18) according to claim 16, in which the traction power determination unit is adapted to also determining data ($F_M$/m) corresponding to the target vehicle's maximum traction power ($F_M$) on the basis of the air resistance constant (C).

**18.** A device (18) according to any one of claims 15-17, in which the gradient detection unit (62) is also adapted to determining the slope ($\alpha$) of a gradient for use of the slope in the processing of acceleration values which is executed with respect to that gradient.

**19.** A device (18) according to any one of claims 10-18, comprising in addition a distance detector (16) for detecting distance values between the vehicle and the target vehicle and supplying input values which are related to the distance values.

**20.** A device (18) according to any one of claims 10-19, comprising in addition a regulating device (28) adapted to regulating the driving of the vehicle.

**21.** A motor vehicle (10) comprising
a distance detector (16) for detecting distance values (d) between the vehicle (10) and a target vehicle (14) and supplying input values ($\Delta v$) which are related to the distance values, a regulating device (28) adapted to regulating the driving of the vehicle, and a device (18) for supporting a regulating strategy for the driving of a vehicle according to any one of claims 10-20.

**22.** A computer programme product (86) for supporting a regulating strategy for the driving of a vehicle (10) and comprising computer programme codes for causing a computer, when said computer programme codes are loaded in that computer, to:

determine a number of acceleration values (a; $a_1$, $a_2$, $a_3$) for a target vehicle (14) on the basis of input values ($\Delta v$), which input values take the form of or are derived from detected distance values for the distance (d) between the vehicle and the target vehicle,
process the acceleration values in order to obtain data (CD; CL; C, $F_M$/m) which characterise the target vehicle,
determine distribution measures (VAR($a_1$), VAR($a_2$), VAR($a_3$)) for the acceleration on the basis of acceleration values in a number of groups of acceleration values ($a_i$, $a_2$, $a_3$), where each group comprises acceleration values determined with respect to corresponding speed values of the vehicle ahead within one of at least two speed ranges, and
deliver said data which characterise the target vehicle to a regulating device (28) for regulation of the driving of the vehicle.

**Patentansprüche**

1.  Verfahren zum Unterstützen einer Regelstrategie für das Fahren eines Fahrzeugs (10), umfassend die Schritte:

    Erfassen (36) einer Anzahl von Beschleunigungswerten ($a$; $a_1$, $a_2$, $a_3$) für ein Zielfahrzeug (14) auf der Grundlage von Eingabewerten (Av), wobei die Eingabewerte die Form von erfassten Abstandswerten für den Abstand (d) zwischen dem Fahrzeug und dem Zielfahrzeug annehmen oder von diesen abgeleitet sind,
    Verarbeiten (40; 52, 54, 56, 58, 70, 72, 74, 76, 78, 80, 82, 84) der Beschleunigungswerte, um Daten (CD; CL; C, $F_M/m$) zu erhalten, die das Zielfahrzeug charakterisieren, und
    Zuführen (42) der Daten, die das Zielfahrzeug charakterisieren, zu einer Regeleinrichtung (28) zum Regeln (44) des Fahrens des Fahrzeugs,
    Bestimmen (52) von Verteilungsmaßen ($VAR(a_1)$, $VAR(a_2)$, $VAR(a_3)$) für die Beschleunigung auf der Grundlage von Beschleunigungswerten in einer Anzahl von Gruppen von Beschleunigungswerten ($a_1$, $a_2$, $a_3$), wobei jede Gruppe Beschleunigungswerte umfasst, die hinsichtlich entsprechender Geschwindigkeitswerte des vorausfahrenden Fahrzeugs innerhalb eines von zumindest zwei Geschwindigkeitsbereichen bestimmt wurden, und
    Klassifizieren (58) von Fahrzeugarten auf der Grundlage der Verteilungsmaße, wobei die Daten, die das Zielfahrzeug charakterisieren, Klassifizierungsdaten (CL) sind, die der Klassifizierung entsprechen.

2.  Verfahren gemäß Anspruch 1, in dem jedes Verteilungsmaß mit zumindest einem Schwellenwert verglichen wird (54) und die Fahrzeugart durch Kombinieren (56) der Ergebnisse der jeweiligen Vergleiche klassifiziert wird.

3.  Verfahren gemäß Anspruch 1 oder 2, in dem das Kombinieren zu einer Vergabe von größerem Gewicht auf ein Verteilungsmaß führt, das für einen höheren Geschwindigkeitsbereich berechnet wurde, als für eines, das für einen niedrigeren Geschwindigkeitsbereich berechnet wurde.

4.  Verfahren gemäß zumindest einem der Ansprüche 1 bis 3, in dem das Kombinieren zu einer Vergabe eines größeren Gewichts auf ein Verteilungsmaß auf der Grundlage von vielen Beschleunigungswerten führt als für eines, das auf weniger Beschleunigungswerten basiert.

5.  Verfahren gemäß zumindest einem der Ansprüche 1 bis 4, zusätzlich umfassend den Schritt des Berechnens einer Wahrscheinlichkeit, dass die Klassifizierung richtig ist, auf der Grundlage der verschiedenen Verteilungsmaße.

6.  Verfahren gemäß zumindest einem der vorangegangenen Ansprüche, in dem der Schritt des Verarbeitens der Beschleunigungswerte zusätzlich die Schritte des Bestimmens (70, 72, 74), ob sich das Zielfahrzeug auf einem Gefälle befindet, und des Bestimmens (76) einer Luftwiderstandskonstanten (C) für das Zielfahrzeug auf der Grundlage von Beschleunigungswerten (a) umfasst, die gesammelt werden, wenn sich das Zielfahrzeug auf dem Gefälle befindet, wobei die Daten, die das Zielfahrzeug charakterisieren, die Luftwiderstandskonstante (C) umfassen.

7.  Verfahren gemäß Anspruch 6, in dem der Schritt des Verarbeitens der Beschleunigungswerte zusätzlich die Schritte des Bestimmens (78, 80, 82), ob sich das Zielfahrzeug auf einer Steigung befindet, und des Bestimmens (84) von Daten ($F_M/m$), die der maximalen Fahrleistung ($F_M$) des Zielfahrzeugs entsprechen, auf der Grundlage von Beschleunigungswerten umfasst, die gesammelt werden, wenn sich das Zielfahrzeug auf der Steigung befindet, wobei die Daten, die das Zielfahrzeug charakterisieren, die Daten ($F_M/m$) umfassen, die der maximalen Fahrleistung ($F_M$) des Fahrzeugs entsprechen.

8.  Verfahren gemäß Anspruch 7, in dem die Bestimmung von Daten ($F_M/m$), die der maximalen Fahrleistung ($F_M$) des Fahrzeugs entsprechen, ebenso auf der Luftwiderstandskonstante (C) basiert.

9.  Verfahren gemäß zumindest einem der Ansprüche 6 bis 8, in dem der Schritt des Verarbeitens der Beschleunigungswerte zusätzlich den Schritt des Bestimmens (72, 80) der Steigung ($\alpha$) eines Gradienten und des Verwendens der Steigung in der Verarbeitung der Beschleunigungswerte umfasst, die bezüglich jenes Gradienten ausgeführt wird.

10. Vorrichtung (18) zum Unterstützen einer Regelstrategie für das Fahren eines Fahrzeugs (10), die umfasst:

    eine Beschleunigungsbestimmungseinheit (22), die eingerichtet ist, um eine Anzahl von Beschleunigungswerten ($a$; $a_1$, $a_2$, $a_3$) für ein vorrausfahrendes Fahrzeug (14) auf der Grundlage von Eingabewerten ($\Delta v$) aus einer Abstandserfassungseinrichtung (16) zu bestimmen, wobei die Eingabewerte die Form von Abstandswerten annehmen oder von diesen abgeleitet sind, die durch die Erfassungseinrichtung für den Abstand (d) zwischen dem Fahrzeug und dem vorrausfahrenden Fahrzeug erfasst wurden,
eine Beschleunigungswertverarbeitungseinheit (26), die eingerichtet ist, um die Beschleunigungswerte zu verarbeiten, um Daten (CD; CL; C, $F_M$/m) zu erhalten, die das Zielfahrzeug charakterisierten, und um die Daten, die das Zielfahrzeug charakterisieren, einer Regelvorrichtung (28) zuzuführen, die eingerichtet ist, um das Fahren des Fahrzeugs zu regeln,
eine Verteilungsbestimmungseinheit (46), die eingerichtet ist, um Verteilungsmaße (VAR($a_1$), VAR($a_2$), VAR($a_3$)) für die Beschleunigung auf der Grundlage von Beschleunigungswerten in einer Anzahl von Gruppen von Beschleunigungswerten ($a_1$, $a_2$, $a_3$) zu bestimmen, wobei jede Gruppe Beschleunigungswerte umfasst, die hinsichtlich entsprechender Geschwindigkeitswerte des vorausfahrenden Fahrzeugs innerhalb eines von zumindest zwei Geschwindigkeitsbereichen bestimmt wurden, und
eine Fahrzeugklassifizierungseinheit (48), die eingerichtet ist, Fahrzeugarten auf der Grundlage der Verteilungsmaße zu klassifizieren, und um die Daten, die das Zielfahrzeug charakterisieren, in Form von Klassifizierungsdaten (CL) zuzuführen, die der Klassifikation entsprechen.

**11.** Vorrichtung (18) gemäß Anspruch 10, in der eine Fahrzeugklassifizierungseinheit (48) eingerichtet ist, um jedes Verteilungsmaß mit zumindest einem Schwellenwert zu vergleichen, und um die Fahrzeugklasse durch Kombinieren der Ergebnisse der jeweiligen Vergleiche zu bestimmen.

**12.** Vorrichtung (18) gemäß Anspruch 10 oder in, in der das Kombinieren zu einer Vergabe eines größeren Gewichts für ein Verteilungsmaß führt, das für einen höheren Bereich berechnet wurde, als für eines, das für einen niedrigeren Geschwindigkeitsbereich berechnet wurde.

**13.** Vorrichtung (18) gemäß zumindest einem der Ansprüche 10 bis 12, in der das Kombinieren zu einer Vergabe eines größeren Gewichts für ein Verteilungsmaß auf der Grundlage von vielen Beschleunigungswerten führt als für eines, das auf weniger Beschleunigungswerten basiert.

**14.** Vorrichtung (18) gemäß zumindest einem der Ansprüche 10 bis 13, in der die Fahrzeugcharakterisierungseinheit ebenso eingerichtet ist, um eine Wahrscheinlichkeit zu berechnen, dass die Klassifizierung richtig ist, auf der Grundlage der verschiedenen Verteilungsmaße.

**15.** Vorrichtung (18) gemäß zumindest einem der Ansprüche 10 bis 14, in der die Beschleunigungswertverarbeitungseinheit (26) umfasst:

eine Gradientenerfassungseinheit (62), die eingerichtet ist, um zu bestimmen, ob sich das Zielfahrzeug auf einem Gefällte befindet, und
eine Luftwiderstandskonstantenbestimmungseinheit (66), die eingerichtet ist, um eine Luftwiderstandskonstante (C) für das Zielfahrzeug auf der Grundlage von Beschleunigungswerten (a) zu bestimmen, die gesammelt werden, wenn sich das Zielfahrzeug auf dem Gefälle befindet, und um die Daten zuzuführen, die das Zielfahrzeug charakterisieren und die Luftwiderstandskonstante (C) umfassen.

**16.** Vorrichtung (18) gemäß Anspruch 15, in der die Gradientenerfassungseinheit (62) ebenso eingerichtet ist, um zu bestimmen, ob sich das Zielfahrzeug auf einer Steigung befindet, und weiterhin eine Fahrleistungsbestimmungseinheit (64) umfasst, die eingerichtet ist, um Daten ($F_M$/m), die der maximalen Fahrleistung ($F_M$) des Zielfahrzeugs entsprechen, auf der Grundlage von Beschleunigungswerten zu bestimmen, die gesammelt werden, wenn sich das Zielfahrzeug auf der Steigung befindet, und um die Daten zuzuführen, die das Zielfahrzeug charakterisieren, und die Daten ($F_M$/m) umfassen, die der maximalen Fahrleistung ($F_M$) des Zielfahrzeugs entsprechen.

**17.** Vorrichtung (18) gemäß Anspruch 16, in der die Fahrleistungsbestimmungseinheit eingerichtet ist, ebenso Daten ($F_M$/m), die der maximalen Fahrleistung ($F_M$) des Zielfahrzeugs entsprechen, auf der Grundlage der Luftwiderstandskonstanten (C) zu bestimmen.

**18.** Vorrichtung (i8) gemäß zumindest einem der Ansprüche 15 bis 17, in der die Gradientenerfassungseinheit (62) ebenso eingerichtet ist, um die Steigung ($\alpha$) eines Gradienten zur Verwendung der Steigung bei der Verarbeitung von Beschleunigungswerten zu bestimmen, die hinsichtlich jenes Gradienten ausgeführt werden.

**19.** Vorrichtung (18) gemäß zumindest einem der Ansprüche 10 bis 18, weiterhin umfassend eine Abstanderfassungseinrichtung (16) zum Erfassen von Abstandswerten zwischen dem Fahrzeug und dem Zielfahrzeug und zum Zuführen von Eingabewerten, die auf die Abstandswerte bezogen sind.

**20.** Vorrichtung (18) gemäß zumindest einem der Ansprüche 10 bis 19, weiterhin umfassend eine Regeleinrichtung (28), die eingerichtet ist, um das Fahren des Fahrzeugs zu regeln.

**21.** Kraftfahrzeug (10) umfassend
eine Abstandserfassungseinrichtung (16) zum Erfassen von Abstandswerten (d) zwischen dem Fahrzeug (10) und einem Zielfahrzeug (14) und zum Zuführen von Eingabewerten ($\Delta v$), die auf die Abstandswerte bezogen sind, eine Regeleinrichtung (28), die eingerichtet ist, um das Fahren des Fahrzeugs zu regeln, und eine Vorrichtung (18) zum Unterstützen einer Regelstrategie für das Fahren eines Fahrzeugs gemäß zumindest einem der Ansprüche 10 bis 20.

**22.** Computerprogrammprodukt (86) zum Unterstützen einer Regelstrategie für das Fahren eines Fahrzeugs (10), das Computerprogrammcodes zum Veranlassen eines Computers umfasst, wenn die Computerprogrammcodes in jenen Computer geladen werden, um:

eine Anzahl von Beschleunigungswerten ($a$; $a_1$, $a_2$, $a_3$) für ein Zielfahrzeug (14) auf der Grundlage von Eingabewerten ($\Delta v$) zu bestimmen, wobei die Eingabewerte die Form von erfassten Abstandswerten für den Abstand (d) zwischen dem Fahrzeug und dem Zielfahrzeug annehmen oder von diesen abgeleitet sind,
die Beschleunigungswerte zu verarbeiten, um Daten (CD; CL; C, $F_M/m$) zu erhalten, die das Zielfahrzeug charakterisieren,
Verteilungsmaße ($VAR(a_1)$, $VAR(a_2)$, $VAR(a_3)$) für die Beschleunigung auf der Grundlage von Beschleunigungswerten in einer Anzahl von Gruppen von Beschleunigungswerten ($a$; $a_1$, $a_2$, $a_3$) zu bestimmen, wobei jede Gruppe Beschleunigungswerte umfasst, die hinsichtlich entsprechender Geschwindigkeitswerte des vorausfahrenden Fahrzeugs innerhalb eines von zumindest zwei Geschwindigkeitsbereichen bestimmt sind, und
die Daten, die das Zielfahrzeug charakterisieren, einer Regeleinrichtung (28) zur Regelung des Fahrens des Fahrzeugs zuzuführen.

## Revendications

**1.** Procédé pour réaliser une stratégie de régulation pour la conduite d'un véhicule (10), comprenant les étapes consistant :

à déterminer (36) un certain nombre de valeurs d'accélération ($a$ ; $a_1$, $a_2$, $a_3$) pour un véhicule cible (14) en fonction de valeurs d'entrée ($\Delta v$), ces valeurs d'entrée prenant la forme, ou étant dérivées, de valeurs de distance détectées pour la distance (d) entre le véhicule et le véhicule cible,
à traiter (40 ; 52, 54, 56, 58 ; 70, 72, 74, 76, 78, 80, 82, 84) les valeurs d'accélération afin d'obtenir des données (CD ; CL ; C, $F_m/m$) qui caractérisent le véhicule cible, et
à délivrer (42) lesdites données qui caractérisent le véhicule cible à un dispositif de régulation (28) pour réguler (44) la conduite du véhicule,
à déterminer (52) des mesures de distribution ($VAR(a_1)$, $VAR(a_2)$, $VAR(a_3)$) pour l'accélération en fonction de valeurs d'accélération dans un certain nombre de groupes de valeurs d'accélération ($a_1$, $a_2$, $a_3$), chaque groupe comprenant des valeurs d'accélération déterminées par rapport à des valeurs de vitesse correspondantes du véhicule à l'avant à l'intérieur de l'une d'au moins deux plages de vitesse, et
à classer (58) des types de véhicule en fonction des mesures de distribution, lesdites données qui caractérisent le véhicule cible étant des données de classification (CL) qui correspondent à la classification.

**2.** Procédé selon la revendication 1, dans lequel chaque mesure de distribution est comparée (54) à au moins une valeur de seuil, et le type de véhicule est classé par combinaison (56) des résultats des comparaisons respectives.

**3.** Procédé selon la revendication 1 ou 2, dans lequel la combinaison comprend le fait de donner un poids plus grand à une mesure de distribution calculée pour une plage de vitesse supérieure qu'à une mesure qui est calculée pour une plage de vitesse inférieure.

**4.** Procédé selon l'une quelconque des revendications 1 à 3, dans lequel la combinaison comprend le fait de donner un poids plus grand à une mesure de distribution basée sur de nombreuses valeurs d'accélération qu'à une mesure qui est basée sur moins de valeurs d'accélération.

**5.** Procédé selon l'une quelconque des revendications 1 à 4, comprenant de plus l'étape de calcul d'une probabilité pour que la classification soit correcte, en fonction des différentes mesures de distribution.

**6.** Procédé selon l'une quelconque des revendications précédentes, dans lequel l'étape de traitement des valeurs d'accélération comprend de plus les étapes de détermination (70, 72, 74) du fait que le véhicule cible est ou non sur une pente descendante et de détermination (76) d'une constante de résistance à l'air (C) pour le véhicule cible en fonction de valeurs d'accélération (a) collectées lorsque le véhicule cible est sur la pente descendante, lesdites données qui caractérisent le véhicule cible comprenant la constante de résistance à l'air (C).

**7.** Procédé selon la revendication 6, dans lequel l'étape de traitement des valeurs d'accélération comprend de plus les étapes de détermination (78, 80, 82) du fait que le véhicule cible est ou non sur une rampe montante et de détermination (84) de données ($F_M$/m) correspondant à la puissance de traction maximale ($F_M$) du véhicule cible en fonction de valeurs d'accélération collectées lorsque le véhicule cible est sur la rampe montante, lesdites données qui caractérisent le véhicule cible comprenant lesdites données ($F_M$/m) correspondant à la puissance de traction maximale ($F_M$) du véhicule cible.

**8.** Procédé selon la revendication 7, dans lequel la détermination de données ($F_M$/m) correspondant à la puissance de traction maximale ($F_M$) du véhicule cible est également basée sur la constante de résistance à l'air (C).

**9.** Procédé selon l'une quelconque des revendications 6 à 8, dans lequel l'étape de traitement des valeurs d'accélération comprend de plus l'étape de détermination (72, 80) de l'inclinaison ($\alpha$) d'un gradient et d'utilisation de l'inclinaison dans le traitement des valeurs d'accélération qui est exécuté vis-à-vis de ce gradient.

**10.** Dispositif (18) pour réaliser une stratégie de régulation pour la conduite d'un véhicule (10), et comprenant :

une unité de détermination d'accélération (22) adaptée de façon à déterminer un certain nombre de valeurs d'accélération (a ; $a_1$, $a_2$, $a_3$) pour un véhicule à l'avant (14) en fonction de valeurs d'entrée ($\Delta v$) venant d'un détecteur de distance (16), ces valeurs d'entrée prenant la forme, ou étant dérivées, de valeurs de distance détectées par le détecteur pour la distance (d) entre le véhicule et le véhicule à l'avant,
une unité de traitement de valeur d'accélération (26) adaptée de façon à traiter les valeurs d'accélération afin d'obtenir des données (CD ; CL ; C, $F_M$/m) qui caractérisent le véhicule cible, et à délivrer lesdites données qui caractérisent le véhicule cible à un dispositif de régulation (28) adapté de façon à réguler la conduite du véhicule, une unité de détermination de distribution (46) adaptée de façon à déterminer des mesures de distribution (VAR($a_1$), VAR($a_2$), VAR($a_3$)) pour l'accélération en fonction de valeurs d'accélération d'un certain nombre de groupes de valeurs d'accélération ($a_1$, $a_2$, $a_3$), chaque groupe comprenant des valeurs d'accélération déterminées par rapport à des valeurs de vitesse correspondantes du véhicule à l'avant à l'intérieur de l'une d'au moins deux plages de vitesse, et
une unité de classification de véhicules (48) adaptée de façon à classer des types de véhicule en fonction des mesures de distribution et à délivrer des données qui caractérisent le véhicule cible sous la forme de données de classification (CL) qui correspondent à la classification.

**11.** Dispositif (18) selon la revendication 10, dans lequel une unité de classification de véhicules (48) est adaptée de façon à comparer chaque mesure de distribution à au moins une valeur de seuil et à déterminer la classe de véhicule par combinaison des résultats des comparaisons respectives.

**12.** Dispositif (18) selon la revendication 10 ou 11, dans lequel ladite combinaison comprend le fait de donner un poids plus grand à une mesure de distribution calculée pour une plage de vitesse supérieure qu'à une mesure qui est calculée pour une plage de vitesse inférieure.

**13.** Dispositif (18) selon l'une quelconque des revendications 10 à 12, dans lequel ladite combinaison comprend le fait de donner un poids plus grand à une mesure de distribution basée sur de nombreuses valeurs d'accélération qu'à une mesure qui est basée sur moins de valeurs d'accélération.

**14.** Dispositif (18) selon l'une quelconque des revendications 10 à 13, dans lequel l'unité caractéristique de véhicule est également adaptée de façon à calculer une probabilité pour que la classification soit correcte, en fonction des différentes mesures de distribution.

**15.** Dispositif (18) selon l'une quelconque des revendications 10 à 14, dans laquelle l'unité de traitement de valeur d'accélération (26) comprend :

une unité de détection de gradient (62) adaptée de façon à déterminer si le véhicule cible est ou non sur une pente descendante, et

une unité de détermination de constante de résistance à l'air (66) adaptée de façon à déterminer une constante de résistance à l'air (C) pour le véhicule cible en fonction de valeurs d'accélération (a) collectées lorsque le véhicule cible est sur la pente descendante, et à délivrer des données qui caractérisent le véhicule cible, comprenant la constante de résistance à l'air (C).

16. Dispositif (18) selon la revendication 15, dans lequel l'unité de détection de gradient (62) est également adaptée de façon à déterminer si le véhicule cible est ou non sur une rampe montante, et comprenant de plus une unité de détermination de puissance de traction (64) adaptée de façon à déterminer des données ($F_M$/m) correspondant à la puissance de traction maximale ($F_M$) du véhicule cible en fonction de valeurs d'accélération collectées lorsque le véhicule cible est sur la rampe montante, et à délivrer des données qui caractérisent le véhicule cible, comprenant lesdites données ($F_M$/m) correspondant à la puissance de traction maximale ($F_M$) du véhicule cible.

17. Dispositif (18) selon la revendication 16, dans lequel l'unité de détermination de puissance de traction est adaptée de façon à déterminer également des données ($F_M$/m) correspondant à la puissance de traction maximale ($F_M$) du véhicule cible en fonction de la constante de résistance à l'air (C).

18. Dispositif (18) selon l'une quelconque des revendications 15 à 17, dans lequel l'unité de détection de gradient (62) est également adaptée de façon à déterminer l'inclinaison ($\alpha$) d'un gradient pour l'utilisation de l'inclinaison dans le traitement de valeurs d'accélération qui est exécuté vis-à-vis de ce gradient.

19. Dispositif (18) selon l'une quelconque des revendications 10 à 18, comprenant de plus un détecteur de distance (16) pour détecter des valeurs de distance entre le véhicule et le véhicule cible et délivrer des valeurs d'entrée qui sont associées aux valeurs de distance.

20. Dispositif (18) selon l'une quelconque des revendications 10 à 19, comprenant de plus un dispositif de régulation (28) adapté de façon à réguler la conduite du véhicule.

21. Véhicule à moteur (10), comprenant :

un détecteur de distance (16) pour détecter des valeurs de distance (d) entre le véhicule (10) et un véhicule cible (14) et délivrer des valeurs d'entrée ($\Delta$v) qui sont associées aux valeurs de distance, un dispositif de régulation (28) adapté de façon à réguler la conduite du véhicule, et un dispositif (18) pour réaliser une stratégie de régulation pour la conduite d'un véhicule selon l'une quelconque des revendications 10 à 20.

22. Produit de programme informatique (86) pour réaliser une stratégie de régulation pour la conduite d'un véhicule (10), et comprenant des codes de programme informatique pour faire en sorte qu'un ordinateur, lorsque lesdits codes de programme informatique sont chargés dans cet ordinateur :

détermine un certain nombre de valeurs d'accélération (a ; $a_1$, $a_2$, $a_3$) pour un véhicule cible (14) en fonction de valeurs d'entrée ($\Delta$v), ces valeurs d'entrée prenant la forme, ou étant dérivées, de valeurs de distance détectées pour la distance (d) entre le véhicule et le véhicule cible, traiter les valeurs d'accélération afin d'obtenir des données (CD ; CL ; C, $F_M$/m) qui caractérisent le véhicule cible, déterminer des mesures de distribution (VAR($a_1$), VAR($a_2$), VAR($a_3$)) pour l'accélération en fonction de valeurs d'accélération dans un certain nombre de groupes de valeurs d'accélération ($a_1$, $a_2$, $a_3$), chaque groupe comprenant des valeurs d'accélération déterminées par rapport à des valeurs de vitesse correspondantes du véhicule à l'avant à l'intérieur de l'une d'au moins deux plages de vitesse, et délivrer lesdites données qui caractérisent le véhicule cible à un dispositif de régulation (28) pour la régulation de la conduite du véhicule.

10

14

16

d

12

FIG. 1

18

24

26

a  $v_t$

16  $\Delta v$  20  $v_t$  22

CD

28

$v_v$

FIG. 2

30 ── RECEIVE DETERMINED RELATIVE SPEED Δv

32 ── RECEIVE DETERMINED VEHICLE SPEED $v_v$

34 ── DETERMINE TARGET VEHICLE'S SPEED $v_t$

36 ── CALCULATE ACCELERATION a

38 ── SAVE ACCELERATION a AND SPEED $v_t$

40 ── PROCESS ACCELERATION VALUES a

42 ── DELIVER CHARACTERISING DATA (CD)

44 ── REGULATE WITH USE OF CHARACTERISING DATA (CD)

FIG. 3

FIG. 4

50 SAVE ACCELERATION AS $a_1$, $a_2$ OR $a_3$
ACCORDING TO MAGNITUE OF SPEED $v_t$

52 CALCULATE VARIANCES VAR($a_1$), VAR($a_2$) AND VAR($a_3$)

54 COMPARE EACH VARIANCE WITH CORRESPONDING THRESHOLD

56 COMBINE RESULTS

58 INDICATE VEHICLE CLASS

FIG. 5

$a_3$          $a_3$

FIG. 6

14          $F_{air}$

$F_{grav}$          $F_w$

$F_{roll}$

$\alpha$          mg

FIG. 7

FIG. 8

FIG. 10    86

FIG. 9

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 03006291 A

- WO 2004086301 A